# EUROPÄISCHE PATENTSCHRIFT

(11) **EP 2 557 141 B1**
(45) Veröffentlichungstag und Bekanntmachung des Hinweises auf die Patenterteilung: **08.04.2015**
(21) Anmeldenummer: 11006572.9
(22) Anmeldetag: 10.08.2011
(51) Int. Cl.: C09K 21/02, B32B 17/06

(54) **Flächenartig ausgebildetes Brandschutzteil, Verfahren zu dessen Herstellung sowie dessen Verwendung**
Laminar fire prevention component, use of same and method for producing same
Elément anti-incendie formé de manière plate, son procédé de fabrication et son utilisation

(43) Veröffentlichungstag der Anmeldung: 13.02.2013
(73) Patentinhaber: AMATO GmbH Brandschutzsysteme, 56316 Niederhofen (DE)
(72) Erfinder: Thiede, Markus, 56305 Döttelsfeld (DE)
(74) Vertreter: Hannke, Christian

(56) Entgegenhaltungen:
- EP-A1- 2 130 673
- DE-A1- 19 720 269
- DE-A1-102004 031 785

## Beschreibung

Die vorliegende Erfindung bezieht sich auf ein flächenartig ausgebildetes Brandschutzteil, welches mit wenigstens einem Raumbegrenzungsflächenteil verbunden ist, wobei das Brandschutzteil aus einem Brandschutzmaterial auf Basis eines anorganischen Sols ausgebildet ist. Ferner bezieht sich die vorliegende Erfindung auf ein Herstellungsverfahren des Brandschutzteils sowie auf mögliche Verwendungszwecke.

Raumbegrenzungsflächenteile umfassen hierbei alle denkbaren Teile, welche geeignet sind einen Raum zu begrenzen, insbesondere statische Wände, Decken, Böden, Trennwände, Türen oder Scheiben. Die Materialien dieser Raumbegrenzungsflächenteile sind beliebig wählbar, so dass beispielsweise Glas, Kunststoff, Verbundwerkstoffe, natürliche Materialien, künstliche Materialien, Holz, Gipskarton, Stein, Zement, Beton, Yton oder Metall zum Einsatz kommen. Die Raumbegrenzungsflächenteile können somit sowohl transparent als auch nicht transparent bzw. zumindest teilweise transparent ausgebildet sein.

Aus dem bisherigen Stand der Technik sind Brandschutzteile bekannt, welche auf stark alkalischer Silikatbasis hergestellt werden. Erfolgt beispielsweise die Anordnung des Brandschutzteils zwischen zwei Glasscheiben zur Bildung eines Brandschutzfensters, so ist bereits nach kurzen Zeiträumen Glaskorrosion zu beobachten. An den gemeinsamen Kontaktflächen von Glas und Brandschutzteil bedingt die hohe pH-Wert-Umgebung die An- bzw. Auflösung des Glasnetzwerks. Dieses korrodiert und wird milchig bis trüb. Das Brandschutzfenster muss ersetzt werden. Bekannter Weise wird die Zusammensetzung des Brandschutzteil zeitaufwendig in einem Mehrschrittverfahren hergestellt, so dass zwischen Herstellung und Verarbeitung zu dem Brandschutzteil Zeitintervalle von Tagen bis Wochen liegen.

So offenbart die DE 10 2004 031 785 A1 ein pyrogenes Kieselsäurepulver, welches als wässrige Dispersion eingesetzt wird. In dieser Dispersion sind zusätzlich wenigstens ein Polyol, Biozide oder Dispergierhilfsmittel vorgesehen. Durch Zugabe der vernetzenden Base erfolgt ein Anstieg des pH-Wertes, welcher bereits nach kurzer Lagerung korrosionsbedingte Trübungen an der gemeinsamen Glaskontaktfläche hervorruft. Diese Trübungen werden durch Netzwerkauflösungen an der Glasoberfläche bedingt und wirken sich insbesondere nachteilig auf die Stabilität der Isolierglasbauteile aus. So wird das Glasnetzwerk aufgelöst und an den korrosionsbedingten Flächen insbesondere im Brandfall eine verminderte Haftung des Füllmaterials bedingt. Zudem erweisen sich die Trübungen als nachteilig, da sie eine problemlose Durchsicht durch die Isolierglasscheiben stark beeinträchtigen und sich besonders während des Alterungsprozesses verschlechtern, bis letztendlich die Scheibe vollkommen eingetrübt ist. Dies ist insbesondere nachteilig bei Fenstern oder Trenntüren in Bürogebäuden.

Des Weiteren ist in der Druckschrift DE 19720260 A1 eine Nanokompositzusammensetzung beschrieben, deren anorganisch oxidische Nanopartikel funktionalisiert eingesetzt werden. Im vernetzten Zustand bildet sich somit ein phasenseparationsfreies Gel aus. Die hierbei beschriebenen synerese-aktiven Gruppen zur Funktionalisierung bedingen dabei starke Wechselwirkungskräfte der Nanopartikel untereinander, sodass unterschiedlich geladene funktionelle Gruppen zur Kettenbildung bzw. zu Agglomeration neigen und nicht direkt mit der Nanopartikeloberfläche eine chemische Bindung eingehen. Folglich ist die Funktionalisierung lediglich statistisch ausgebildet. Dies erweist sich in der Praxis häufig als nachteilig, da derart funktionalisierte Nanopartikel in der Herstellung sehr teuer sind und aufgrund der Teilladungen auch zu unkontrollierten Vernetzungsreaktionen neigen.

Ferner beschreibt die EP 2130673 A1 eine Schicht aus hydratisiertem Alkalimetallsilikat, welches im Brandfall einen trüben Schaum ausbildet. Dieser wirkt der Strahlungstransmission entgegen und erhält die Verglasung aufrecht. Das hier beschriebene Verfahren zur Herstellung dieses Alkalimetallsilikats erweist sich als ziemlich aufwendig, bis überhaupt eine Verarbeitung der Zusammensetzung erfolgen kann. Aufgrund der stundenlangen Rührphasen bzw. Ruhephasen sind somit große Lagerflächen und Lagerbehältnisse notwendig, um die Schichtzusammensetzung bis zu einer möglichen Verarbeitung zu lagern. Ferner erweist sich die hier beschriebene Schicht auch als nachteilig, da die Schichtzusammensetzung zunächst auf ein Substrat aufgebracht und vernetzt wird, um dann im Anschluss mit einem zweiten Substrat aufkaschiert zu werden. Dies erweist sich als äußerst umständlich, kosten- und zeitaufwendig.

Daher ist es Aufgabe der vorliegenden Erfindung, ein Brandschutzteil bereitzustellen, dessen Brandschutzmaterial im ausgehärteten Zustand eine hohe Alterungsbeständigkeit sowie eine hohe Stabilität gegenüber Korrosion aufweist. Zudem liegt der vorliegenden Erfindung die Aufgabe zugrunde ein Verfahren zur Herstellung eines Brandschutzteils sowie dessen Verwendung bereitzustellen, so dass eine schnellere und kostengünstigere Herstellung ermöglicht wird.

Diese Aufgabe wird erzeugnisseitig durch die Merkmale des Patentanspruches 1 sowie verfahrensseitig durch Patentanspruch 8 gelöst. Zudem wird diese Aufgabe verwendungsseitig durch die Ansprüche 14 und 15 gelöst.

Vorteilhafte Ausführungsformen und Weiterbildungen sind Gegenstand der Unteransprüche.

Die Kerngedanke der vorliegenden Erfindung besteht darin, ein flächenartig ausgebildetes Brandschutzteil bereitzustellen, welches mit wenigstens einem Raumbegrenzungsflächenteil verbunden ist, wobei das Brandschutzteil aus Brandschutzmaterial auf Basis eines anorganischen Sols ausgebildet ist und die Zusammensetzung des Brandschutzmaterials folgendes umfasst:
- 25 - 70 Gewichts-% SiO₂ (Feststoffgehalt)
- 0,05 - 10 Gewichts-% Tenside
- 0,01 - 25 Gewichts-% Polyol
- 0,05 - 2 Gewichts-% Alkalimetalloxid
- 0,05 - 20 Gewichts-% Säure
- 0,01 - 10 Gewichts-% Korrosionsschutzmaterial
- destilliertes oder entionisiertes Wasser,
wobei die Zusammensetzung des Brandschutzmaterials bei der Herstellung gießbar ist und durch Zugabe einer Base aushärtbar ist, wobei die Tenside anionisch, kationisch und/oder amphother ausgebildet sind.

Als Sol ist hierbei eine kolloidale Lösung, bevorzugt auf Wasserbasis, zu verstehen, wobei die Kolloide als nahezu monodisperse Primärpartikel mit einem Durchmesser im Bereich von 1 bis 1000 nm vorliegen. Vorteilhaft werden erfindungsgemäß Kieselsole eingesetzt. Darüber hinaus ist jedoch auch denkbar, andere anorganische Sole, beispielsweise auf Titan oder Aluminiumbasis zu verwenden.

Die Verwendung eines Sols ist vorteilhaft, da die kolloidalen Primärpartikel, welche auch als Precursor bzw. Vorstufe verstanden werden können, schnell und einfach miteinander vernetzbar sind. Bevorzugt erfolgt eine derartige Vernetzung chemisch, beispielsweise durch Zugabe einer Base. Ferner sind auch Vernetzungsreaktionen denkbar, welche durch Zugabe einer Säure erfolgen.

Durch die Vernetzung des anorganischen Sols, bevorzugt durch Hydrolyse- und Kondensationsreaktionen, ist eine Zunahme der Viskosität zu beobachten. Es entsteht ein Gel, welches sowohl eine flüssige Phase, hier bevorzugt Wasser, und eine Feststoffphase aufweist. Dies ist besonders im Brandfall vorteilhaft, da das im Gel beinhaltete Wasser zur Brandbegrenzung dient.

Vorzugsweise weist das Brandschutzmaterial 25 - 70 Gewichts-% SiO₂ (Feststoffgehalt), bevorzugt 35 bis 55 Gewichts-% SiO₂ und besonders bevorzugt 45 bis 50 Gewichts-% SiO₂ bezogen auf die Gesamtmasse des Materials auf. Dies ist vorteilhaft, da das Kieselsol als Precursor den Ausgangsstoff für das Grundgerüst des Brandschutzteils bildet. Dies ist besonders vorteilhaft, da somit je nach Höhe des Feststoffgehalts an Siliziumdioxid der Vemetzungsgrad, die Stabilität sowie die Eigenfestigkeit des resultierenden Brandschutzmaterials nach Basenzugabe gesteuert werden kann. So bedingt beispielsweise ein hoher Feststoffgehalt an Siliziumdioxid auch eine hohe Stabilität und Eigenfestigkeit des Brandschutzmaterials, da durch die Basenzugabe ein dichtes Netzwerk erzeugt wird.

Ferner weist das Brandschutzmaterial vorteilhaft 0,05 bis 10 Gewichts-% Tenside auf, die anionisch, kationisch und/oder amphoter ausgebildet sind. Dies ist vorteilhaft, da diese Tenside bevorzugt geladen vorliegen. Durch Zugabe der Tenside zu dem Brandschutzmaterial wird im Herstellungsprozess des Brandschutzteils eine verbesserte Adhäsion an den Raumbegrenzungsflächenteilen erzielt. Je nach Oberflächenladung dieser Raumbegrenzungsflächenteile wird durch geeignete Auswahl und Zugabe der Tenside zu dem brandschutzmaterial dessen Oberflächenspannung vorbestimmbar veränderbar, so dass für jedes Raumbegrenzungsflächenteilmaterial, wie beispielsweise Glas oder Beton, das Adhäsionsverhalten des Brandschutzmaterials daran deutlich verbessert wird. So werden vorteilhaft Tenside gewählt, welche eine gleichmäßige Benetzung der Oberfläche der Raumbegrenzungsflächenteile mit dem Brandschutzmaterial begünstigen, beispielsweise durch die Erniedrigung der Oberflächenspannung. Die Benetzung ist vorteilhaft dauerhaft, so dass sowohl während des Herstellungsverfahrens, des Aushärteverfahrens sowie im Alterungsprozess die Benetzung weiterhin gleichmäßig erfolgt, ohne dass Benetzungsfehlstellen in Form von Entnetzung auftreten. Zudem bedingen die Tenside im Brandfall vorteilhaft, dass der durch die Wärmedehnung der dem Feuer zugewandten Seite des Raumbegrenzungsflächenteils verursachte Bruch des Raumbegrenzungsflächenteils glatt erfolgt, ohne dass Stücke oder Teile des Brandschutzmaterials daran haften. Vorteilhaft bleibt das ausgehärtete Brandschutzteil im Brandfall intakt. Die eingesetzten Tenside dienen somit vorteilhaft der Haftvermittlung.

Darüber hinaus weist das Brandschutzmaterial 0,01 bis 25 Gewichts-% Polyol auf. Die Zugabe des Polyols erfolgt bevorzugt in einem Bereich von 0,01 bis 20 Gewichts-%, insbesondere in einem Bereich von 1-15 Gewichts-% und insbesondere bevorzugt in einem Bereich von 5-12 Gewichts-%, bezogen auf die Gesamtmasse des Brandschutzmaterials. Vorteilhaft wird durch die Zugabe wenigstens eines Polyol Gefrierpunkt des Brandschutzmaterials im Niedrigtemperaturbereich erniedrigt. Wird ein unmodifiziertes Kieselsol mit Temperaturen von unter 0°C beaufschlagt, so wird das irreversible Ausfallen von fester, weißer Kieselsäure bedingt. In der vorliegenden Erfindung würde sich dies stark nachteilig auf die Transparenz des Brandschutzmaterials auswirken. So würden beispielsweise transparente Glasscheiben dauerhaft eintrüben, sobald die Außentemperatur unter 0°C fällt. Daher ist es vorteilhaft durch Zugabe wenigstens eines Polyols zu dem Brandschutzmaterial dessen Gefrierpunkt herabzusetzen, so dass ein Ausfällen der festen Kieselsäure bevorzugt erst ab Temperaturen von kleiner -15°C und besonders bevorzugt von kleiner -30°C bedingt wird.

Erfindungsgemäß werden hierbei Polyole wie beispielsweise Ethylenglykol, Diethylenglykol, Triethylenglykol, Polyethylenglykol, Propylenglykol, Dipropylenglykol, Tripropylenglykol, Polypropylenglykol und Glyzerin oder Mischungen daraus eingesetzt.

Darüber hinaus weist das Brandschutzmaterial 0,05 bis 2 Gewichts-% Alkalimetalloxid, bevorzugt 0,1 bis 1 Gewichts-% bezogen auf die Gesamtmasse des Brandschutzmaterials auf. Vorteilhaft ist das Alkalimetalloxid bereits im Kieselsol enthalten.

Bevorzugt weist das Brandschutzmaterial 0,05 - 20 Gewichts-% einer Säure auf. Dies ist vorteilhaft, da durch Zugabe der Säure eine Einstellung des pH-Werts des Brandschutzmaterials, bevorzugt auf wässriger Basis, erfolgt. Durch die Absenkung des pH-Wertes des Brandschutzmaterials wird vorteilhaft der basischen Glaskorrosion entgegengewirkt, sofern die Raumbegrenzungsflächenteile aus Glas ausgebildet sind. Dies ist vorteilhaft, da somit keine durch die Glaskorrosion bedingten Trübungen an der Glasoberfläche bedingt werden. Ferner ist vorteilhaft, dass durch die Absenkung des pH-Wertes zudem die Lagerfähigkeit des ausgehärteten Brandschutzteils verbessert wird. Zudem wirk sich eine erniedrigter pH-Wert auch keimtötend auf Pilze oder Bakterien im Brandschutzmaterial aus, so dass die Zugabe von teuren Fungiziden oder Bakteriziden zu dem Brandschutzmaterial entfällt.

Vorteilhaft weist das Brandschutzmaterial zudem 0,01 bis 10 Gewichts-%, bevorzugt 0,05 bis 2 Gewichts-% und besonders bevorzugt 0,1 bis 1 Gewichts-% Korrosionsschutzmaterial bezogen auf die Gesamtmasse des Brandschutzmaterials auf. Durch Zugabe dieses Korrosionsschutzmaterials wird vorteilhaft die korrodierende Wirkung des Brandschutzmaterials an den Grenzflächen zu den Raumbegrenzungsflächenteilen im Wesentlichen reduziert.

Darüber hinaus weist das Brandschutzmaterial vorteilhaft destilliertes oder entionisiertes Wasser auf. Dieses dient als Lösungsmittel, so dass der erfindungsgemäße Brandschutzmaterial einfach zu verarbeiten ist. Je nach gewünschter Viskosität erfolgt die Zugabe an Wasser. Vorteilhaft wird gerade soviel Wasser zugegeben, dass ein gießbares Brandschutzmaterial entsteht.

Vorteilhaft ist das erfindungsgemäße Brandschutzmaterial durch Zugabe einer Base aushärtbar, wobei vorteilhaft unter aushärtbar hierbei vernetzbar zu verstehen ist. Durch Zugabe der Base wird vorteilhaft das im Brandschutzmaterial enthaltene Sol zu einem Gel vernetzt, wodurch eine Viskositätszunahme bedingt wird. Das Brandschutzmaterial härtet somit aus. Vorteilhaft wird der Grad der Aushärtung durch die zugegebene Menge an Base steuerbar. Je nach Anwendung kann auch ein nicht vollständig ausgehärtetes, also vernetztes, Brandschutzmaterialgel zum Einsatz kommen. Vorteilhaft ist nach der Aushärtung ein poröses Netzwerk auf Siliziumbasis entstanden, in dessen Poren vorteilhaft das verwendete Lösungsmittel, hier bevorzugt Wasser, eingelagert ist.

Als Base sind jegliche basische Verbindungen denkbar, wie beispielsweise Alkali- oder Erdalkalihydroxide, -alkoxide oder Alkalisilikate, wie beispielsweise Wasserglas, bevorzugt Kaliumwasserglas. Vorteilhaft wird die Base erfindungsgemäß als 30 bis 50 Gewichts-%ige Alkalihydroxidlösung in Wasser, beispielsweise Natriumhydroxid oder Kaliumhydroxid oder eine Mischung daraus, dem Brandschutzmaterial zugeführt. Bevorzugt weist die Base 5 bis 25 Gewichts-% und besonders bevorzugt 12 bis 15 Gewichts-% reines Hydroxid, bezogen auf die Gesamtmasse des Brandschutzmaterials, auf.

Vorteilhaft entsteht durch Zugabe der hier beschriebenen Base zu dem oben beschriebenen Brandschutzmaterial ein Reaktionsprodukt, bevorzugt ein Alkalimetalloxid, im Bereich von 2 bis 20 Gewichts-%, bevorzugt 5 bis 15 Gewichts-% bezogen auf die Gesamtmasse des Brandschutzmaterials nach Basenzugabe. Bevorzugt ergibt sich durch die durch Zusammenführung des Brandschutzmaterials mit der Base bedingte Reaktion ein Molverhältnis von Siliziumdioxid zu Alkalimetalloxid von bevorzugt größer 4,5 : 1 und besonders bevorzugt von 5 bis 6 : 1.

Bevorzugt ist das erfindungsgemäße Brandschutzmaterial im ausgehärteten Zustand transparent ausgebildet. Dies ist besonders vorteilhaft, wenn es zum Brandschutz zwischen zwei Glasscheiben als Raumbegrenzungsflächenteile angeordnet ist. Ferner ist jedoch auch denkbar, das erfindungsgemäße Brandschutzmaterial zumindest teilweise lichtundurchlässig auszubilden, beispielsweise dann, wenn auch die Raumbegrenzungsflächenteile nicht transparent, beispielsweise aus Beton, ausgebildet sind.

Im Brandfall wird vorteilhaft durch die Temperaturzunahme eine Verdampfung des Wassers bedingt, wodurch das ausgehärtete Brandschutzmaterial durch die Gasbildung aufschäumt.

In einer weiteren bevorzugten Ausführungsform weist das Brandschutzmaterial des Brandschutzteils vor Zugabe der Base einen pH-Wert im Bereich von 2 - 7, bevorzugt im Bereich von 3 - 5, auf. Das Brandschutzmaterial ist somit bevorzugt sauer bis neutral und wird nicht wie aus dem Stand der Technik bekannt, bereits basisch mit einem pH-Wert > 7 vorgelegt. Durch diese saure bis neutrale Eigenschaft des Brandschutzmaterials werden vorteilhaft bei Verarbeitung und Alterungsprozess des Brandschutzteils die gemeinsamen Grenzflächen der Raumbegrenzungsflächenteile nicht basisch angegriffen. Eine Materialkorrosion wird somit verhindert. Dies ist besonders vorteilhaft, wenn die Raumbegrenzungsflächenteile aus transparentem Glas oder auch Kunststoff ausgebildet sind, wo sich eine Materialkorrosion in Form von Eintrübungen auswirkt und die Transparenz somit verschlechtert. Vorteilhaft werden somit erfindungsgemäß korrosionsbedingte Eintrübungen oder auch Netzwerkauflösungen der Raumbegrenzungsflächenteile verhindert. Darüber hinaus wirkt sich ein geringer pH-Wert zudem negativ auf das Bakterien- bzw. Pilzwachstum aus.

Des Weiteren ist bevorzugt, dass das Korrosionsschutzmaterial eine Zusammensetzung aufweist, wobei wenigstens ein oder mehrere chemische Elemente aus der Gruppe der Übergangsmetalle, Nichtmetalle, Halbmetalle oder Metalle sind. Insbesondere werden hierbei Zink, Zirkonium, Zinn, Bor, Aluminium oder Phosphor bevorzugt, wobei ebenfalls bevorzugt die Korrosionsschutzzusammensetzung als Oxidform und/oder als Salzform vorliegt.

Beispiele hierfür sind Alumininat, Borat, Zirkonat, Zinnstannat, Zinkstannat, Zirkonstannat, Phosphat oder auch Aluminiumoxid, Boroxid, Zinnoxid, Phosphoroxid, Zinkoxid, Zirkonoxid und Borax bzw. eine Mischung hieraus.

Durch Zugabe dieser Oxide und/oder Salze zu dem Brandschutzmaterial wird eine zusätzliche korrosionsschützende Wirkung bedingt, so dass gemeinsame Kontaktflächen von Raumbegrenzungsflächenteilen und Brandschutzteil langfristig stabil sind und keine korrosionsbedingte Materialauflösung bzw. Netzwerkauflösung der Raumbegrenzungsflächenteile eintritt.

Bevorzugt erfolgt die Zugabe des Korrosionsschutzmaterials im Bereich von 0,01 bis 10 Gewichts-%, besonders bevorzugt im Bereich von 0,05 bis 2 Gewichts-% und insbesondere bevorzugt im Bereich von 0,1 bis 1 Gewichts-%, bezogen auf die Gesamtmasse des Brandschutzmaterials.

In einer weiteren vorteilhaften Ausführungsform ist die Säure des Brandschutzmaterials aus der Gruppe Salzsäure, Schwefelsäure, Salpetersäure, Phosphorsäure, Borsäure, Essigsäure, Ameisensäure, Ameisensäureamid, Methacrylsäure, Methacrylsäurealkylester, bevorzugt Methacrylsäuremethylester, Maleinsäure und/oder Acrylsäure oder einer Mischung hieraus bevorzugt ausgewählt. Vorteilhaft ist die Alkylgruppe des Metacrylsäurealkylesters als MEthyl, Ethyl, Propyl, Butyl ausgebildet, aber selbstverständlich nicht darauf begrenzt. Neben Säuren sind auch Säurebildner, also sauer reagierende Zusammensetzungen denkbar.

Vorzugsweise wird die Säure im Bereich von 0,05 bis 20 Gewichts-%, bevorzugt im Bereich von 0,1 bis 10 Gewichts-% und besonders bevorzugt im Bereich von 0,1 bis 5 Gewichts-%, bezogen auf die Gesamtmasse des Brandschutzmaterials, zugegeben. Durch Zugabe der Säure wird vorteilhaft eine Absenkung des pH-Wertes der Zusammensetzung des Brandschutzmaterials bedingt, wodurch das Brandschutzmaterial stabilisiert wird und somit eine verbesserte Lagerfähigkeit aufweist. Zudem wird durch das Absenken des pH-Wertes der Zusammensetzung eine keimtötende Wirkung auf Bakterien und Pilze erzielt, welche sich insbesondere im sauren Medium nicht vermehren können.

Zudem ist die Zugabe der Säure zu dem Brandschutzmaterial vorteilhaft, da somit der basische Angriff auf die anliegenden Grenzflächen der Raumbegrenzungsflächenteile vermieden wird, insbesondere wenn diese Raumbegrenzungsflächenteile aus Glas ausgebildet sind. Somit wird die Glaskorrosion verhindert, wodurch auch bereits kleinste Verletzungen der Glasoberfläche im Herstellungsverfahren, beispielsweise im Floatglasprozess, sichtbar werden und somit auch die Qualität im Falle von transparenten Brandschutzteilen signifikant verschlechtert.

Bei der Erfindung sind die in dem Brandschutzmaterial enthaltenen Tenside anionisch, kationisch und/oder amphoter ausgebildet. Durch die Zugabe der Tenside, vorzugsweise im Bereich von 0,05 bis 10 Gewichts-%, bevorzugt im Bereich 0,1 bis 5 Gewichts-% und insbesondere bevorzugt im Bereich von 0,1 bis 2 Gewichts-%, bezogen auf die Gesamtmasse des Brandschutzmaterials, werden die physikalischen Eigenschaften der Brandschutzmasse derart verändert, dass die Adhäsion des Brandschutzteils im ausgehärteten Zustand an den Raumbegrenzungsflächenteilen verbessert wird. Die Tenside wirken somit vorteilhaft als Haftvermittler.

Zudem wird die Oberflächenspannung des wässrigen Brandschutzmaterials vor der Aushärtung herabgesetzt, wodurch sich eine verbesserte Adhäsion an der Grenzfläche der gemeinsamen Raumbegrenzungsflächenteile ergibt. So ist beispielsweise denkbar, dass die eingesetzten Tenside an der gemeinsamen Grenzfläche des Brandschutzteils mit den Raumbegrenzungsflächenteilen eine einfache oder auch eine doppelte Grenzschicht bilden. Durch die entsprechende anionische, kationische und/oder amphotere Ladung der vorteilhaft als Grenzschicht angeordneten Tensidmoleküle wird die Adhäsion des Brandschutzmaterials an dem Raumbegrenzungsflächenteil verbessert und zwar nicht nur während der Aushärtung, sondern insbesondere auch während des Brandfalls. Ferner ist denkbar, dass die Tensidmoleküle in dem Brandschutzmaterial statistisch angeordnet sind.

Es hat sich gezeigt, dass im Brandfall bei Ablösen oder Bruch eines Raumbegrenzungsflächenteils das ausgehärtete Brandschutzteil aufschäumt und intakt bleibt.

Im Weiteren liegt die Idee der vorliegenden Erfindung in einem einstufigen, kontinuierlichen Verfahren zur Herstellung eines Brandschutzteils, welches folgende Schritte umfasst:
- Bereitstellung von zwei Vorratsbehältern, wobei ein erster Vorratsbehälter mit den Ausgangsstoffen der Brandschutzzusammensetzung
   - 25 - 70 Gewichts-% SiO₂ (Feststoffgehalt)
   - 0,05 - 10 Gewichts-% Tenside
   - 0,1 - 25 Gewichts-% Polyol
   - 0,05 - 2 Gewichts-% Alkalimetalloxid
   - 0,05 - 20 Gewichts-% Säure
   - 0,01 - 10 Gewichts-% Korrosionsschutzmaterial
   - destilliertes oder entionisiertes Wasser
   bestückt wird und diese in dem ersten Vorratsbehälter vermischt werden und ein zweiter Vorratsbehälter mit einem basischen Ausgangsstoff bestückt wird;
- Bereitstellung zweier Fördereinrichtungen zur jeweiligen Förderung der Ausgangsstoffe aus dem Vorratsbehälter in eine Mischeinrichtung, wobei die der Mischeinrichtung zugeführt Masse an Ausgangsstoffen vorbestimmbar ist;
- Vermischung der Ausgangsstoffe aus den beiden Vorratsbehältern zu einer Materialmischung in der Mischeinrichtung;
- kontinuierliche Entgasung der Materialmischung durch Rotation in einer mit Vakuum beaufschlagten Einrichtung;
- Förderung der entgasten Materialmischung mittels einer weiteren Förderungseinrichtung zur Verarbeitung;
- Verarbeitung der entgasten Materialmischung indem die Materialmischung in einen Hohlraum gefüllt wird, welcher von zwei plattenartigen zu einander im Wesentlichen parallel angeordneten Teilen aufgespannt wird, wobei die beiden Teile umfangsseitig bis auf eine nach oben gerichtete Öffnung zum Befüllen des aufgespannten Hohlraums abgedichtet sind; und
   Aushärtung der Materialmischung bei erhöhter Temperatur im Bereich von 65 - 95 °C.

In einem ersten Vorratsbehälter werden somit die Ausgangsstoffe des Brandschutzmaterials vorgelegt, wobei diese dauerhaft vermischt werden, beispielsweise mittels eines geeigneten Rührwerkzeuges. Vorteilhaft ist denkbar, dass zu diesem ersten Vorratsbehälter vorteilhaft sieben getrennt voneinander installierte Zuführungsmittel angeordnet sind, mittels welchen die aufgezeigten Rohstoffe Kieselsol, welches bevorzugt das Alkalimetalloxid bereits enthält, Tenside, Polyol, Säure, Korrosionsschutzmaterial und Wasser dem Vorratsbehälter zuführbar sind. Vorteilhaft erfolgt diese Zuführung dauerhaft während des gesamten Herstellungsverfahrens. Bevorzugt wird die entsprechende Rohstoffzuführung computergesteuert und automatisiert.

In dem zweiten Vorratsbehälter wird ein basischer Ausgangsstoff vorgelegt, beispielsweise in wässriger Form eines Alkali- oder Erdalkalihydroxids, wie beispielsweise bevorzugt Natrium oder Kaliumhydroxid. Die basische Lösung im zweiten Vorratsbehälter ist vorteilhaft als 25 bis 60 %, bevorzugt als 45 bis 55% Metallhydroxidlösung in Wasser vorgelegt. Vorteilhaft entspricht dies 10 bis 20 Gewichts-%, bevorzugt 12 bis 15 Gewichts-% reinen Metallhydroxids bezogen auf die Gesamtmasse des Brandschutzmaterials. Bei Reaktion der Ausgangsstoffe des ersten Vorratsbehälters mit den Ausgangsstoffen des zweiten Vorratsbehälters ergibt sich ein Reaktions-Molverhältnis von Siliziumdioxid zu Alkalimetalloxid von größer 4,5 zu 1 und bevorzugt von 5 - 6 zu 1.

Ferner ist denkbar, anstelle des basischen Metallhydroxids wenigstens ein Alkalisilikat vorzusehen, beispielsweise Natrium- oder Kaliumsilikat.

Beide Vorratsbehälter stehen mit jeweils einer eigenen Fördereinrichtung zur Förderung der Ausgangsstoffe aus den entsprechenden Vorratsbehältern in ständiger Verbindung. Mittels dieser Fördereinrichtungen werden die Ausgangsstoffe einer Mischeinrichtung zugeführt, wobei die der Mischeinrichtung zugeführte Masse an Ausgangsstoffen jeweils vorbestimmbar ist.

Vorteilhaft ist die vorgesehene Mischeinrichtung als statischer Mischer ausgebildet, beispielsweise aus Kunststoff oder Edelstahl. Die Mischeinrichtung ist erfindungsgemäß rohrartig ausgebildet. Die Zuführung der Ausgangsstoffe aus dem ersten Vorratsbehälter sowie des basischen Ausgangsstoffes des zweiten Vorratsbehälters erfolgt vorteilhaft zu Beginn der rohrartigen Mischeinrichtung. Die Vermischung beider Chargen erfolgt durch die vorteilhafte feste Anordnung von Vermischungsteilen innerhalb des rohrartigen Mischeinrichtung, sodass durch dauerhafte Druckbeaufschlagung durch Zuführung der Ausgangsstoffe aus den beiden Vorratsbehältern in die Mischeinrichtung, diese in Längsrichtung der Mischeinrichtung gefördert werden. Die Vermischungsteile bedingen hierbei entsprechende Strömungsturbolenzen, sodass ein effektiver Mischvorgang innerhalb der Mischeinrichtung erzeugt wird.

Bei einer vorteilhaften Ausführungsform des Verfahrens ist die Mischeinrichtung bei Zuführung der jeweiligen Ausgangsstoffe aus den beiden Vorratsbehältern höher temperiert als bei Austritt der Materialmischung aus der Mischeinrichtung. Vorzugsweise weist ein erster Abschnitt der Mischeinrichtung eine erhöhte Temperatur im Bereich von 40 - 90°C, bevorzugt zwischen 50 - 80°C und insbesondere bevorzugt zwischen 60 - 70°C auf. Diese Temperaturerhöhung der Mischeinrichtung und somit auch der darin geförderten Materialmischung an Ausgangsstoffen bedingt eine schnellere Reaktionszeit des Vemetzungsvorgangs.

In einem zweiten Abschnitt der Mischeinrichtung, welcher in Längsrichtung der Mischeinrichtung nach dem ersten Abschnitt mit höherer Temperatur angeordnet ist, wird das gemischte Brandschutzmaterial auf 10 - 40°C, insbesondere 20 - 30°C und insbesondere bevorzugt auf 20 - 25°C herunter gekühlt. Vorteilhaft wird sowohl im ersten Erwärmungsabschnitt der Mischeinrichtung als auch im zweiten Kühlungsabschnitt der Mischeinrichtung die Temperatur des Brandschutzmaterials mittels geeigneter Sensoren, bevorzugt automatisch, erfasst. In Ausnahmefällen ist somit die automatische Nachjustierung der Temperatur möglich und auf den vorbestimmbaren Bereich einzustellen.

Nach dem Herunterkühlen der Materialmischung in der Mischeinrichtung wird die Brandschutzmaterialmischung durch Rotation in einer mit Vakuum beaufschlagten Einrichtung kontinuierlich entgast. Bevorzugt ist diese mit Vakuum beaufschlagte Einrichtung als Vakuumentlüfter ausgebildet. Innerhalb der mit Vakuum beaufschlagten Einrichtung wird die Brandschutzmaterialmischung auf einem zentrisch angeordneten Schleuderteller kontinuierlich aufgebracht, welcher umfangsseitig mit einem siebartigen Begrenzungsabschnitt umschlossen ist. Durch Rotation des Schleudertellers wird das darauf aufgebrachte Material radial nach außen geschleudert und durch die entsprechenden siebartigen Poren des siebartigen Begrenzungsabschnittes, welcher bevorzugt Öffnungen im Größenbereich von 5 - 500 µm, insbesondere im Bereich von 25 - 100 µm aufweist, auf die Innenwand der mit Vakuum beaufschlagten Elnrichtung geschleudert.

Bevorzugt liegt an der mit Vakuum beaufschlagten Einrichtung ein Vakuum im Bereich von 10 - 150 mbar absolut und insbesondere im Bereich von 50 - 90 mbar absolut an.

Durch das radiale Schleudern der aufgebrachten Brandschutzmaterialmischung auf den Schleuderteller und durch die damit einhergehende radiale Durchführung durch den siebartigen Begrenzungsabschnitt werden vorteilhaft in der Brandschutzmaterialmischung enthaltene Gaseinschlüsse, wie beispielsweise Luftblasen oder andere Gasblasen, entfernt.

Ferner ist denkbar, während der kontinuierlichen Entgasung der Brandschutzmaterialmischung in der mit Vakuum beaufschlagten Einrichtung zusätzliche anorganische Stoffe zuzuführen, welche bevorzugt aus der Gruppe: Pigmente, Metalloxide, Mischoxide, Kohlefaser, Keramikfaser, Glasfaser, Glasmehl, Mikrohohlglaskugeln, Sand, Ton, Bentonit oder einer Mischung hieraus gewählt werden. Somit ist möglich, das erfindungsgemäße Brandschutzmaterial beispielsweise farblich zu gestalten. Die Zugabe anorganischer Zusatzstoffe bevorzugt während oder nach der kontinuierlichen Entgasung zu der Brandschutzmaterialmischung erfolgt bevorzugt im Bereich von 0,01 bis 10 Gewichts-%, insbesondere im Bereich von 0,1 bis 5 Gewichts-%, bezogen auf die Gesamtmasse der Brandschutzmischung. Durch Zugabe dieser anorganischen Zusatzstoffe werden vorteilhaft die mechanische Festigkeit und die Feuerfestigkeit des ausgehärteten Brandschutzteils deutlich verbessert.

Im Weiteren wird die nun entgaste Materialmischung mittels einer weiteren Fördereinrichtung aus der Vakuum beaufschlagten Einrichtung hinaus zur Verarbeitung befördert. Eine Verarbeitung der entgasten Brandschutzmaterialmischung kann vielseitig erfolgen. Vorteilhaft weist das erfindungsgemäße Brandschutzmaterial eine Verarbeitungszeit im Bereich von mindestens zwei Stunden, bevorzugt von mindestens vier Stunden und besonders bevorzugt im Bereich von sechs bis zwölf Stunden auf.

Die erfindungsgemäße Brandschutzmaterialmischung kann auf unterschiedliche Weise verarbeitet werden. Im einfachsten Fall ist denkbar, dass zwei zueinander parallel angeordnete, aber in einem vorbestimmbaren Abstand zueinander beabstandet angeordnete Raumbegrenzungsflächenteile vorgesehen sind, welche somit einen zwischen ihnen liegenden Hohlraum aufspannen. Dieser Hohlraum wird vorteilhaft umfangsseitig durch geeignete Dichtungsmaterialien geschlossen, sodass bevorzugt wenigstens eine, bevorzugt jedoch mehrere, Öffnungen, welche nach oben gerichtet geöffnet sind, vorgesehen werden. Durch diese Öffnungen der Umfangsbegrenzung erfolgt die Einfüllung der entgasten Brandschutzmaterialmischung. Vorteilhaft ist denkbar, an den entsprechenden Öffnungen platten- und/oder schraubenartige Mittel vorzusehen, durch welche das Einfüllen der entgasten Brandschutzmaterialmischung erleichtert wird. So kann beispielsweise ein schräg angeordnetes plattenartiges Mittel das einzufüllende entgaste Brandschutzmaterial an wenigstens eine den Hohlraum begrenzende Seitenfläche des Raumbegrenzungsflächenteils führen. Dies verhindert beim Befüllen vorteilhaft Blasenbildung. Nach vollständiger Füllung des Hohlraumes werden die entsprechenden Füllungsöffnungen abgedichtet und verschlossen. Bevorzugt erfolgt das Verschließen der Füllöffnungen mittels wenigstens ein schnellhärtendes, vorteilhaft elastisch ausgebildetes, Polymer, wie beispielsweise einem Silikon. Dies ist vorteilhaft, da die Füllöffnungen somit abdichtend verschlossen werden, so dass keine Brandschutzmasse austreten kann. Vorteilhaft wird das entgaste Brandschutzmaterial blasenfrei abgefüllt.

Im Anschluss folgt die Aushärtung der Brandschutzmaterialmischung, welche nun zwischen den beiden Raumbegrenzungsflächenteilen angeordnet ist, bei erhöhter Temperatur, bevorzugt im Bereich von 50 - 110°C und besonders bevorzugt im Bereich von 65 - 95°C. Durch die finale Aushärtung der Brandschutzmateriaimischung entsteht das Brandschutzteil, welches fest zwischen den Raumbegrenzungsflächenteilen angeordnet ist. Des Weiteren ist vorteilhaft, wenn zur Aushärtung das Brandschutzteils horizontal gelagert aushärtet.

Darüber hinaus ist denkbar, dass die Aushärtung des Brandschutzteils neben Temperaturbeaufschlagung durch Konvektion auch mittels Strahlung, beispielsweise mittels Infrarot- oder Mikrowellenstrahlung, erfolgen kann. Bevorzugt findet die Aushärtung in einem Zeitbereich von 27 - 30 Stunden und insbesondere bevorzugt in einem Bereich von 22 - 26 Stunden statt.

Je nach Verwendung des Brandschutzteils kann dieses zwischen transparenten Raumbegrenzungsflächenteilen oder auch nicht transparenten Raumbegrenzungsflächenteilen angeordnet werden.

Vorteilhaft sind die entsprechenden Raumbegrenzungsflächenteile transparent, beispielsweise aus Glas, PVC, PMMA (Plexiglas) oder auch nicht transparent, wie beispielsweise aus Metall, Kunststoffen, Gipskarton, Keramik, Holz, Stein, Beton oder mineralische Verbundstoffe ausgebildet.

Ferner wäre zudem denkbar, dass der durch die beiden Raumbegrenzungsflächenteile aufgespannte Hohlraum neben dem Brandschutzmaterial zudem weitere anorganische oder organische Materialien, wie beispielsweise Mineralwolle, aufweist. Es wäre somit denkbar, derartige organische oder anorganische Materialien mit dem Brandschutzmaterial vor der Aushärtung zu tränken, zu besprühen, zu bestreichen oder zu versetzen, um dann diese anorganischen und/oder organischen Materialien in den entsprechenden Hohlraum zwischen den beiden Raumbegrenzungsflächenteilen einzubringen und dort auszuhärten. Dies ist vorteilhaft, wenn beispielsweise nicht transparente Brandschutzbauteile benötigt werden.

Ferner ist denkbar, anstelle der basischen Metallhydroxidlösung im zweiten Vorratsbehälter eine Alkalisilikatlösung vorzusehen. Vorteilhaft weist bei Reaktion des stabilisierten Brandschutzmaterials aus dem ersten Vorratsbehälter mit dem basischen bzw. basisch reagierenden Alkalisilikat des zweiten Vorratsbehälters eine Reaktion auf, welche ein Molverhältnis von Siliziumdioxid zu Alkalimetalloxid größer von 4,5 : 1, insbesondere im Bereich von 5 - 6 : 1 bedingt.

Weitere vorteilhafte Ausführungsformen ergeben sich aus der beigefügten Zeichnung.

Darin zeigt:

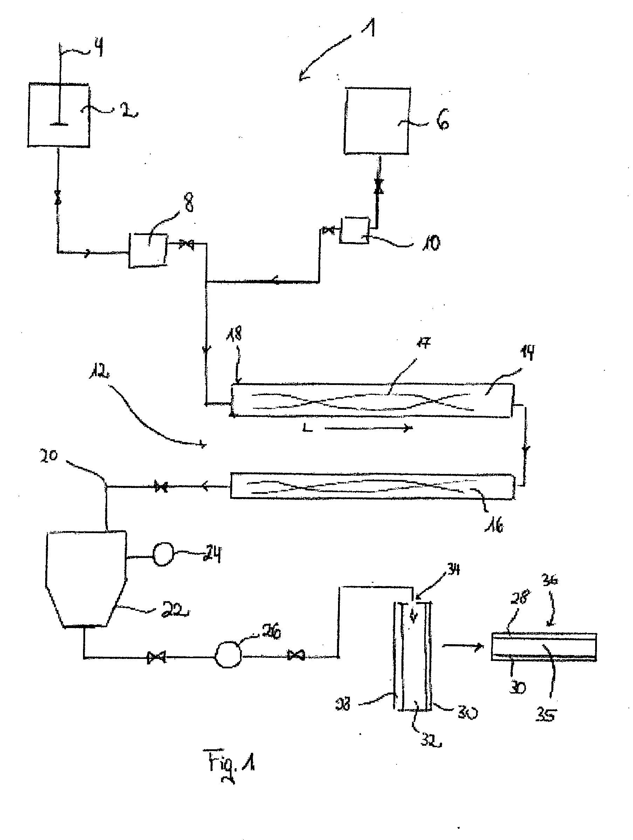

- Fig. 1: eine erfindungsgemäße Vorrichtung zum Herstellen des erfindungsgemäßen Brandschutzteils.

Fig. 1 zeigt eine erfindungsgemäße Vorrichtung 1 zur Herstellung eines erfindungsgemäßen Brandschutzteils. Ein erster Vorratsbehälter 2 wird mit den Ausgangsstoffen Kieselsol, Tenside, Polyol, Säure, Korrosionsschutzmaterial und destilliertem oder entionisiertem Wasser bestückt, wobei eine pH-Wert-Einstellung der genannten wässrigen Lösung mittels Säure, Oxide und Salzen erfolgt. Vorteilhaft weist der erste Vorratsbehälter 2 eine Rührvorrichtung 4 auf, mittels welcher die zugegebenen Rohstoffe dauerhaft vermischt werden.

Ferner weist die erfindungsgemäße Vorrichtung 1 einen zweiten Vorratsbehälter 6 auf, in welchem wenigstens ein basischer Ausgangsstoff in einer vorbestimmbaren Konzentration vorlegbar ist. Vorteilhaft wird hierbei eine alkalische wässrige Hydroxidlösung, bevorzugt eine Kaliumhydoxidlösung, oder eine wässrige Alkalisilikatlösung vorgelegt.

Beide Vorratsbehälter 2, 6 sind mit einer jeweiligen Fördereinrichtung 8, 10 in dauerhafter Verbindung, sodass die in den Vorratsbehältern 2, 6 vorgelegten Ausgangsstoffe aus diesen Vorratsbehältern 2, 6 heraus gefördert werden können. Vorteilhaft sind die Fördereinrichtungen 8, 10 als pumpenartige Einrichtungen, beispielsweise als Dosierpumpen, vorgesehen. Somit ist möglich, dass mittels der Dosiereinrichtung 8 und der Dosiereinrichtung 10 unterschiedliche Quantitäten aus den Vorratsbehältern 2, 6 der Mischeinrichtung 12 zugeführt werden. Je nach Herstellung bzw. Anwendungsfall ist die entsprechende Leitung der Fördereinrichtungen 8, 10 variabel vorbestimmbar. Bevorzugt werden beide Fördereinrichtungen 8, 10 automatisch computergesteuert und verfügen vorteilhaft über entsprechende entsprechende Flussmesssensorik.

Die Mischeinrichtung 12 der vorliegenden Erfindung weist einen ersten Abschnitt 14 sowie einen zweiten Abschnitt 16 auf, wobei eine Zuführung der Ausgangsstoffe aus dem ersten Vorratsbehälter 2 und dem zweiten Vorratsbehälter 6 im Anfangsbereich 18 des ersten Abschnitts 14 der rohrartigen Mischeinrichtung 12 kontinuierlich zugeführt werden. Durch die kontinuierliche Nachförderung der Ausgangsmaterialien mittels der Fördereinrichtungen 8 und 10 wird innerhalb der rohrartigen Mischeinrichtung 12 das zugeführte Material durch Druckbeaufschlagung in Längsrichtung L weiter gefördert. Es ist denkbar, dass die Ausgangsstoffe aus den Vorratsbehältern 2, 6 räumlich getrennt oder bereits als Mischung zugeführt werden.

Vorteilhaft weist der erste Abschnitt 14 der Mischeinrichtung 12 eine Temperaturerhöhungseinrichtung auf, sodass die innerhalb der rohrartigen Mischeinrichtung 12 geförderten Ausgangsstoffe beider Vorratsbehälter 2, 6 miteinander vermischt werden, beispielsweise durch geeignete statische Vermischungsteile 17. Bevorzugt wird in dem ersten Abschnitt 14 der Mischeinrichtung 12 das durchgeförderte Brandschutzmaterial auf einen Bereich von 40 - 80°C, bevorzugt auf einen Bereich von 50 - 70°C und besonders bevorzugt auf einen Bereich von 60 - 65°C temperiert. Bevorzugt erfolgt eine entsprechende Temperaturkontrolle automatisch mittels geeigneter Sensorik. Der erste Abschnitt 14 ist somit als Heizabschnitt zu verstehen.

In einem zweiten Abschnitt 16 der Mischeinrichtung 12 wird das durchgeförderte Brandschutzmaterial gekühlt, bevorzugt auf einen Bereich von 15 - 20°C. Entsprechend des Heizabschnittes 14 wird auch in den Kühlabschnitt 16 die Temperatur mittels geeigneter Sensorik automatisiert überwacht und ggf. korrigiert.

Die Brandschutzmaterialmischung, welche bevorzugt eine Verarbeitungstemperatur im Bereich von 15 - 20°C aufweist, wird über eine weitere Transportleitung 20 einer mit Vakuum beaufschlagten Einrichtung 22 zugeführt, welche bevorzugt trichterförmig nach unten ausgebildet ist, und welche mit einer Vakuumpumpe 24 dauerhaft mit Vakuum beaufschlagt ist.

Vorteilhaft können der Brandschutzmaterialmischung in der mit Vakuum beaufschlagten Einrichtung 22 weitere bevorzugt mineralische Füllstoffe oder Zusatzstoffe zugegeben werden, wie beispielsweise Pigmente. Eine Vermischung erfolgt mittels gängiger Rühr- bzw. Mischwerkzeugen.

Nach der Entgasung der Materialmischung wird diese aus der bevorzugt trichterförmigen mit Vakuum beaufschlagten Einrichtung 22 abgeführt und mittels einer Dosiereinrichtung 26 verarbeitet. Zwei zueinander beabstandet angeordnete Raumbegrenzungsflächenteile 28, 30 spannen einen Hohlraum 32 auf, welcher durch die Dosiereinrichtung 26 mit erfindungsgemäßen Brandschutzmaterial befüllt wird. Nach vollständiger Befüllung wird die Füllöffnung 34 verschlossen. Zum Aushärten des Brandschutzteils 35 wird das entstandene Verbundelement 36 bevorzugt um 90° gedreht und horizontal unter erhöhter Temperatur gelagert.

Folgende Ausführungsbeispiele dienen der Veranschaulichung und sind jedoch nicht dar auf begrenzt:

### Beispiel 1:

Vorbereitung von 1.114,8 kg einer 50%igen Kieselsol-Lösung in einem ersten Vorratsbehälter, wobei unter konstantem Rühren 78 kg wasserfreies Glyzerin, 4,8 kg Acrylsäure, 1,2 kg Borrax und 1,2 kg einer Tensidmischung aus anionischen und kationischen Tensiden zugeführt wird. Das Brandschutzmaterial aus diesem ersten Vorratsbehälter 2 wird mittels einer Förderungseinrichtung 8, beispielsweise einer Dosierpumpe, welche auf eine Fördermenge von 338 Liter pro Stunde einstellbar ist, angeschlossen.

In einem zweiten Vorratsbehälter 6 werden 1.200 kg einer 50%igen KOH-Mischung vorgesehen. Eine zweiten Fördereinrichtung 10, beispielsweise als Dosierpumpe ausgebildet, wird auf ein Fördervolumen von 112 Liter pro Stunde justiert.

Ein erster Abschnitt 14 der Mischeinrichtung 12, welche bevorzugt als statischer Mischer ausgebildet ist, wird auf 70° C vorgeheizt und ein zweiter Abschnitt 16 der Mischeinrichtung 12 wird auf 20° C temperiert. So wird innerhalb der Mischeinrichtung 12 ein Temperaturgradient erzeugt.

Zudem wird eine mit Vakuum beaufschlagte Einrichtung 22 durch eine Vakuumpumpe 24 mit etwa 50 - 100 mbar absolut beaufschlagt.

Sind alle diese vorbereitenden Dinge erledigt, werden die Fördereinrichtungen 8 und 10 sowie die Fördereinrichtung 26 gestartet.

In diesem Beispiel werden zwei Raumbegrenzungsflächenteile 28 und 30, hier Edelstahlplatten, mit einer Dicke von jeweils 1 mm und einer Größe von 1,2 m x 0,8 m derart angeordnet, dass sich ein zwischen diesen beiden Edelstahlplatten angeordneter Hohlraum 32 von etwa 5 mm bedingt. Nach umfangsseitiger Abdichtung dieses Hohlraumes 32 wird dieser dann mit der entstandenen Brandschutzmaterialmischung befüllt und in einer Wärmekammer in horizontaler Ausrichtung bei 85°C für 24 Stunden ausgehärtet. Durch die Aushärtung wird ein Verbundelement 36 aus Brandschutzteil 35 und den beiden Raumbegrenzungsflächenteilen28, 30 bedingt.

Nach der Aushärtung wurde dieses Verbundelement 36 bestehend aus den Edelstahlplatten und des ausgehärteten Brandschutzteils 35 in einen Brandofen eingebaut und nach der Vorschrift DIN 1363 für den Feuerwiderstand getestet. Erstaunlicherweise ergibt sich, dass das Verbundelement 42 Minuten dieser Norm standhält und somit als Brandschutzelement der Klasse DIN, El, BS eingesetzt werden kann.

In einem anderen Experiment wurden zwei Raumbegrenzungsflächenteile 28, 30 aus Glas, hier zwei Floatglasplatten, entsprechend den oben beschriebenen Verfahren gefüllt und ausgehärtet. Danach wurde ein Alterungstest nach EN ISO 12543-4 unter Temperatur, Feuchtigkeit und UV-Strahlung unterzogen. Es wurden keine negativen Effekte in Form weißer Flecken gefunden, welche durch Korrosion an der Glasfläche hervor gerufen werden und welche aus dem Stand der Technik bekannt sind. Zudem zeigte sich keine Trübung des Brandschutzteils in Folge von Alterung.

Nach diesem Alterungstest wurde das entstandene Verbundelement 36 in einen Brandofen eingebaut und nach der Vorschrift DIN 1363 für Feuerwiderstand getestet. Es ergab sich, dass das Verbundelement 36 Minuten dieser Norm standhält und somit als Brandschutzelement der Klasse DIN, El, BS eingesetzt werden kann.

### Beispiel 2:

In einem ersten Vorratsbehälter 2 werden 1.114,8 kg einer 50%igen Kieselsol-Lösung vorgelegt und unter kontinuierlichem Rühren eines Rührwerkzeuges 78 kg wasserfreies Glyzerin, 4,8 kg Acrylsäure, 1,2 kg Borax und 1,2 kg einer Tensidmischung bestehend aus anionischen und kationischen Tensiden zugeführt und durchgemischt. Die Fördereinrichtung 8, welche in diesem Fall wiederum als Dosierpumpe ausgebildet ist, wird auf ein Fördervolumen von 195 Liter pro Stunde eingestellt.

Im zweiten Vorratsbehälter 6 werden 1.200 kg einer Kaliumsilikatlösung vorgelegt, wobei die zweite Förderungseinrichtung 10 auf ein Fördervolumen von 255 Liter pro Stunde eingestellt wird.

Die Mischeinrichtung 12 weist einen ersten Abschnitt 14 auf, welcher auf 70°C vortemperiert wird und einen zweiten Abschnitt 16, welcher auf 20°C vortemperiert wird. Die dem weiteren Förderungsverlauf vorgesehene mit Vakuum beaufschlagte Einrichtung 22 wird über eine Vakuumpumpe 24 mit einem Vakuum im Bereich von 50 mbar - 100 mbar absolut beaufschlagt.

Anschließend werden die Fördereinrichtungen 8, 10 sowie 26 in Betrieb genommen. In diesem Beispiel werden zwei Raumbegrenzungsflächenteil, 28 und 30, hier Edelstahlplatten, mit einer Dicke von jeweils 1 mm und einer Größe von 1,2 m x 0,8 m derart angeordnet, dass sich ein dazwischen liegender Hohlraum 32 von 5 mm bedingt, welcher umfangsseitig bevorzugt bis auf eine nach oben gerichtete Öffnung, abgedichtet wird. Dieser Hohlraum 32 wird dann mit dem fertigen Brandschutzmaterial verfüllt und in einer Wärmekammer waagerecht/horizontal bei 85° C für 24 Stunden ausgehärtet.

Nach der Aushärtung ergibt sich ein Verbundelement 36, bestehend aus dem Brandschutzteil 35 sowie den beiden Raumbegrenzungsflächenteilen 28, 30, welche hier als die beiden Edelstahlplatten ausgebildet sind. Das Verbundelement 36 wird in einen Brandofen eingebaut und nach Vorschrift DIN 1363 für den Feuerwiderstand getestet. Es ergibt sich, dass das Verbundelement für 41 Minuten dieser Norm standhält und somit als Brandschutzelement der Klasse DIN, El und BS eingesetzt werden kann.

Im Weiteren wurden anstelle der beiden Edelstahlpatten, Glasplatten, wie beispielsweise Floatglasplatten, verwendet und wie oben beschrieben gefüllt und ausgehärtet. Danach wurde das entstandene Verbundelement 36 einem Alterungstest nach EN ISO 12543-4 unter Temperatur, Feuchtigkeit und UV-Strahlung unterzogen. Es zeigten sich keine korrosionsbedingten Änderungen der Glasoberfläche in Form weißer Flecken, wie sie aus dem Stand der Technik bekannt sind. Darüber hinaus zeigte sich eine dauerhafte Transparenz des Brandschutzmaterials in Folge der Alterung. Nach diesem Alterungstest wurde das entstandene Verbundelement 36 in einen Brandofen eingebaut und nach der Vorschrift DIN 1363 für Feuerwiderstand getestet. Es ergab sich, dass das Verbundelement 37 Minuten dieser Norm standhält und somit ebenfalls als Brandschutz der Klasse DIN, El, BS eingesetzt werden kann.

Selbstverständlich sind die Flussraten der Dosierpumpen nicht auf die genannten Werte beschränkt, sondern können auch variabel einstellbar sein. Vorteilhaft weisen die Dosierpumpen Förderraten im Bereich von 150 bis 300 l und bevorzugt im Bereich von 190 bis 260 l auf.

Ferner ist denkbar zwei Mischeinrichtungen vorzusehen, wobei einer erste Mischeinrichtung zu Erwärmung des Brandschutzmaterials und eine zweite Mischeinrichtung zum Kühlen des Brandschutzmaterials dient. Vorteilhaft sind beide Mischeinrichtung dauerhaft miteinander verbunden.

Ferner sind an den Zuführungsleitungen vorteilhaft eine Vielzahl an Ventilen angebracht, welche manuell oder automatisch regulierbar und schließbar sind.

### Bezugszeichenliste

- 1: Vorrichtung
- 2: erster Vorratsbehälter
- 4: Rührvorrichtung
- 6: zweiter Vorratsbehälter
- 8: Fördereinrichtung/Dosiereinrichtung
- 10: Fördereinrichtung/Dosiereinrichtung
- 12: Mischeinrichtung
- 14: erster Abschnitt
- 16: zweiter Abschnitt/Kühlabschnitt
- 18: Anfangsbereich
- 22: Einrichtung
- 24: Vakuumpumpe
- 26: Dosiereinrichtung
- 28: erstes Raumbegrenzungsflächenteil
- 30: zweites Raumbegrenzungsflächenteil
- 32: Hohlraum
- 34: Füllöffnung
- 35: Brandschutzteil
- 36: Verbundelement
- L: Längsrichtung

## Patentansprüche

1. Flächenartig ausgebildetes Brandschutzteil (35), welches mit wenigstens einem Raumbegrenzungsflächenteil (28) verbunden ist, wobei das Brandschutzteil (35) aus Brandschutzmaterial auf Basis eines anorganischen Sols ausgebildet ist und die Zusammensetzung des Brandschutzmaterials folgendes umfasst:
- 25 - 70 Gewichts-% SiO₂ (Feststoffgehalt)
- 0,05 - 10 Gewichts-% Tenside
- 0,01 - 25 Gewichts-% Polyol
- 0,05 - 2 Gewichts-% Alkalimetalloxid
- 0,05 - 20 Gewichts-% Säure
- 0,01 - 10 Gewichts-% Korrosionsschutzmaterial
- destilliertes oder entionisiertes Wasser,
wobei die Zusammensetzung des Brandschutzmaterials bei der Herstellung gießbar ist und durch Zugabe einer Base aushärtbar ist,
wobei die Tenside anionisch, kationisch und/oder amphoter ausgebildet sind.

2. Brandschutzteil nach Anspruch 1,
**dadurch gekennzeichnet**, dass
die Zusammensetzung des Brandschutzmaterials vor Zugabe der Base einen pH-Wert im Bereich von 2 bis 7, bevorzugt im Bereich von 3 bis 5, aufweist.

3. Brandschutzteil nach Anspruch 1 und 2,
**dadurch gekennzeichnet**, dass
das Korrosionsschutzmaterial eine Zusammensetzung aufweist, wobei wenigstens ein oder mehrere Elemente aus der Gruppe der Übergangsmetalle, Nichtmetalle, Halbmetalle oder Metall sind, insbesondere Zink, Zirkonium, Zinn, Bor, Phospohor, Aluminium, und die Korrosionsschutzzusammensetzung als Oxidform und/oder Salzform vorliegt.

4. Brandschutzteil nach Anspruch 1,
**dadurch gekennzeichnet**, dass
die Säure aus der Gruppe Salzsäure, Schwefelsäure, Salpetersäure, Phosphorsäure, Bohrsäure, Essigsäure, Ameisensäure, Ameisensäureamid, Methacrylsäure, Methacrylsäurealkylester, Maleinsäure und/oder Acrylsäure oder eine Mischung hieraus ausgewählt ist.

5. Brandschutzteil nach Anspruch 4,
**dadurch gekennzeichnet**, dass
0,05 -20 Gewichts-%, bevorzugt 0,1 - 10 Gewichts-%, besonders bevorzugt 0,1 - 5 Gewichts.% bezogen auf die Gesamtmasse, Säure enthalten sind.

6. Brandschutzteil nach einem der vorangegangenen Ansprüche,
**dadurch gekennzeichnet**, dass
0,05 - 10 Gewichts-%, bevorzugt 0,1 - 5 Gewichts-%, besonders bevorzugt 0,1 - 2 Gewichts-%, bezogen auf die Gesamtmasse, Tenside enthaltend ist.

7. Einstufiges, kontinuierliches Verfahren zur Herstellung eines Brandschutzteils (35) folgende Schritte umfassend:
- Bereitstellung von zwei Vorratsbehältern (2, 6), wobei ein erster Vorratsbehälter (2) mit den Ausgangsstoffen der Brandschutzzusammensetzung
• 25 - 70 Gewichts-% SiO₂ (Feststoffgehalt)
• 0,05 - 10 Gewichts-% Tenside
• 0,1 - 25 Gewichts-% Polyol
• 0,05 - 2 Gewichts-% Alkalimetalloxid
• 0,05 - 20 Gewichts-% Säure
• 0,01 - 10 Gewichts-% Korrosionsschutzmaterial
• destilliertes oder entionisiertes Wasser
bestückt wird und diese in dem ersten Vorratsbehälter(2) vermischt werden und ein zweiter Vorratsbehälter (6) mit einem basischen Ausgangsstoff bestückt wird;
- Bereitstellung zweier Fördereinrichtungen (8, 10) zur Förderung der Ausgangsstoffe aus dem jeweiligen Vorratsbehälter (2, 6) in eine Mischeinrichtung (12), wobei die der Mischeinrichtung (12) zugeführte Masse an Ausgangsstoffen vorbestimmbar ist;
- Vermischung der Ausgangsstoffe aus den beiden Vorratsbehältern (2, 6) zu einer Materialmischung in der Mischeinrichtung (12);
- kontinuierliche Entgasung der Materialmischung durch Rotation in einer mit Vakuum beaufschlagten Einrichtung (22);
- Förderung der entgasten Materialmischung mittels einer weiteren Dosiereinrichtung (26) zur Verarbeitung;
- Verarbeitung der entgasten Materialmischung indem die Materialmischung in einen Hohlraum (32) gefüllt wird, welcher von zwei plattenartigen zu einander im Wesentlichen parallel angeordneten Raumbegrenzungsflächenteilen (28, 30) aufgespannt wird, wobei die beiden Raumbegrenzungsflächenteile (28, 30) umfangsseitig bis auf eine nach oben gerichtete Öffnung (34) zum Befüllen des aufgespannten Hohlraums (32) abgedichtet sind; und
- Aushärtung der Materialmischung bei erhöhter Temperatur im Bereich von 65 - 95 °C
wobei die Tenside anionisch, kationisch und/oder amphoter ausgebildet sind.

8. Verfahren zur Herstellung eines Brandschutzteils nach Anspruch 7,
**dadurch gekennzeichnet, dass**
die Mischeinrichtung (12) bei Zuführung der Ausgangsstoffe aus den beiden Vorratsbehältern (2, 6) höher temperiert wird als bei Austritt der Materialmischung aus der Mischeinrichtung (12).

9. Verfahren zur Herstellung eines Brandschutzteils nach Anspruch 7 und 8,
**dadurch gekennzeichnet, dass**
die Mischeinrichtung (12) bei Zuführung der Ausgangsstoffe aus den beiden Vorratsbehältern (2, 6) auf eine Temperatur von 40 bis 80°C, bevorzugt auf 50 bis 70°C und besonders bevorzugt auf 60 bis 65°C eingestellt wird.

10. Verfahren zur Herstellung eines Brandschutzteils nach Anspruch 7 bis 9,
**dadurch gekennzeichnet, dass**
die Temperatur der Materialmischung in Längsrichtung (L) innerhalb der Mischeinrichtung (12) abnimmt.

11. Verfahren zur Herstellung eines Brandschutzteils nach Anspruch 7 bis 10,
**dadurch gekennzeichnet, dass**
während der kontinuierlichen Entgasung anorganische Zusatzstoffe zugeführt werden können, welche bevorzugt aus der Gruppe Pigmente, Metalloxide, Mischoxide, Kohlefaser, Keramikfaser, Glasfaser, Glasmehl, Mikrohohlglaskugeln, Sand, Ton, Bentonit oder eine Mischung hieraus ausgewählt werden.

12. Verfahren zur Herstellung eines Brandschutzteils nach Anspruch 7 bis 10,
**dadurch gekennzeichnet, dass**
die Aushärtung des Brandschutzteils (35) mittels Temperatur, bevorzugt mittels Konvektion, oder Strahlung, bevorzugt Infrarotstrahlung oder Mikrowellenstrahlung, im Bereich von 20 bis 30h, bevorzugt im Bereich von 22 bis 26h, erfolgt.

## Claims

1. A fire protection component (35) which is formed in a planar manner and which is connected tc at least one space-bounding surface component (28), wherein the fire protection component (35) is formed from fire protection material on the basis of an inorganic sol and the composition of the fire protection material comprises the following:
- from 25 to 70 % by weight of SiO₂ (solids content)
- from 0.05 to 10 % by weight of surfactants
- from 0.01 to 25 % by weight of polyol
- from 0.05 to 2 % by weight of alkali-metal oxide
- from 0.05 to 20 % by weight of acid
- from 0.01 to 10 % by weight of corrosion protection material
- distilled or de-ionized water,
wherein the composition of the fire protection material is capable of being poured during the production and is capable of being cured by the addition of a base,
wherein the surfactants are made anionic, cationic and/or amphoteric.

2. A fire protection component according to claim 1, **characterized in that** before the addition of the base the composition of the fire protection material has a pH value in the range of from 2 to 7, preferably in the range of from 3 to 5.

3. A fire protection component according to claim 1 and 2, **characterized in that** the corrosion protection material has a composition in which at least one or more elements are from the group of transition metals, non-metals, semi-metals or metal, in particular zinc, zirconium, tin, boron, phosphorus, aluminium, and the corrosion protection composition is present in the form of an oxide and/or a salt.

4. A fire protection component according to claim 1, **characterized in that** the acid is selected from the group of hydrochloric acid, sulphuric acid, nitric acid, phosphoric acid, boric acid, acetic acid, formic acid, formic acid amide, methacrylic acid, methacrylic acid alkyl ester, maleic acid and/or acrylic acid or a mixture thereof.

5. A fire protection component according to claim 4, **characterized in that** from 0.05 to 20 % by weight, preferably from 0.1 to 10 % by weight, and in a particularly preferred manner from 0.1 to 5 % by weight relative to the overall mass, of acid is contained.

6. A fire protection component according to any one of the preceding claims, **characterized in that** from 0.05 to 10 % by weight, preferably from 0.1 to 5 % by weight, and in a particularly preferred manner from 0.1 to 2 % by weight, relative to the overall mass, of surfactant is containing.

7. A one-stage, continuous method of producing a fire protection component (35), comprising the following steps:
- the preparation of two storage containers (2, 6), wherein a first storage container (2) is provided with the starting materials of the fire protection composition
• from 25 to 70 % by weight of SiO₂ (solids content)
• from 0.05 to 10 % by weight of surfactants
• from 0.1 to 25 % by weight of polyol
• from 0.05 to 2 % by weight of alkali-metal oxide
• from 0.05 to 20 % by weight of acid
• from 0.01 to 10 % by weight of corrosion protection material
• distilled or de-ionized water
and these are mixed in the first storage container (2), and a second storage container (6) is provided with a basic starting material;
- preparation of two conveying devices (8, 10) for conveying the starting materials out of the respective storage container (2, 6) into a mixing device (12), wherein the mass of starting materials supplied to the mixing device (12) is capable of being determined in advance;
- mixing of the starting materials from the two storage containers (2, 6) to form a mixture of materials in the mixing device (12);
- continuous de-gassing of the mixture of materials by rotation in a device (22) acted upon with a vacuum;
- conveying of the de-gassed mixture of materials by means of a further metering device (26) to the processing;
- processing of the de-gassed mixture of materials in that the mixture of materials are poured into a cavity (32) which is spanned by two plate-like space-bounding surface portions (28, 30) arranged substantially parallel to each other, wherein the two plate-like space-bounding surface portions (28, 30) are sealed off on the periphery apart from an upwardly directed opening (34) for filling the spanned cavity (32), and
- hardening of the mixture of materials at an increased temperature in the range of from 65 to 95°C, wherein the surfactants are made anionic, cationic and/or amphoteric.

8. A method of producing a fire protection component according to claim 7, **characterized in that** the mixing device (12) is tempered to a higher degree during the supply of the starting materials from the two storage containers (2, 6) than during the exit of the mixture of materials out of the mixing device (12).

9. A method of producing a fire protection component according to claims 7 and 8, **characterized in that** during the supply of the starting materials from the two storage containers (2, 6) the mixing device (12) is set to a temperature of from 40 to 80°C, preferably to from 50 to 70°C, and in a particularly preferred manner to from 60 to 65°C.

10. A method of producing a fire protection component according to claims 7 to 9, **characterized in that** the temperature of the mixture of materials drops inside the mixing device (12) in the longitudinal direction (L) .

11. A method of producing a fire protection component according to claims 7 to 10, **characterized in that** inorganic additives, which are preferably selected from the group of pigments, metal oxides, mixed oxides, carbon fibres, ceramic fibres, glass fibres, glass powder, micro-hollow glass balls, sand, clay, bentonite or a mixture thereof, can be supplied during the continuous de-gassing.

12. A method of producing a fire protection component according to claims 7 to 10, **characterized in that** the hardening of the fire protection component (35) is carried out by means of temperature, preferably by means of convection, or radiation, preferably infrared radiation or microwave radiation, in the region of from 20 to 30 h, preferably in the region of from 22 to 26 h.

## Revendications

1. Elément de protection anti-incendie (35) formé de manière surfacique, qui est relié à au moins un élément surfacique de délimitation spatiale (28), ledit élément de protection anti-incendie (35) étant formé à partir d'un matériau de protection anti-incendie à base d'un sol inorganique et la composition du matériau de protection anti-incendie comprenant les composants suivants :
- 25 à 70 % en poids de SiO₂ (teneur en matière solide)
- 0,05 à 10 % en poids de tensioactifs
- 0,01 à 25 % en poids de polyol
- 0,05 à 2 % en poids d'oxyde d'un métal alcalin
- 0,05 à 20 % en poids d'acide
- 0,01 à 10 % en poids d'une matière anti-corrosive
- de l'eau distillée ou déminéralisée,
dans lequel la composition du matériau de protection anti-incendie est coulable lors de la fabrication et durcissable par vieillissement par addition d'une base,
dans lequel les tensioactifs sont anioniques, cationiques et/ou amphotères.

2. Elément de protection anti-incendie selon la revendication 1, **caractérisé en ce que**
la composition du matériau de protection anti-incendie présente un pH dans la plage de 2 à 7, de préférence dans la plage de 3 à 5, avant l'addition de la base.

3. Elément de protection anti-incendie selon les revendications 1 et 2, **caractérisé en ce que**
la matière de protection anti-corrosive comprend une composition, dans laquelle au moins un ou plusieurs éléments proviennent du groupe des métaux de transition, des non - métaux, des semi-métaux ou des métaux, notamment le zinc, le zirconium, l'étain, le bore, le phosphore, l'aluminium et la composition de protection anti-corrosive se présente sous forme d'oxyde et/ou de sel.

4. Elément de protection anti-incendie selon la revendication 1, **caractérisé en ce que**
l'acide est choisi dans le groupe constitué par l'acide chlorhydrique, l'acide sulfurique, l'acide nitrique, l'acide phosphorique, l'acide borique, l'acide acétique, l'acide formique, le formamide, l'acide méthacrylique, l'alkylester d'acide méthacrylique, l'acide maléique et/ou l'acide acrylique ou un mélange de ceux-ci.

5. Elément de protection anti-incendie selon la revendication 4, **caractérisé en ce que**
0,05 à 20 % en poids, de préférence 0,1 à 10 % en poids, particulièrement préférentiellement 0,1 à 5 % en poids d'acide, par rapport à la masse totale, sont contenus.

6. Elément de protection anti-incendie selon une des revendications précédentes, **caractérisé en ce que**
0,05 à 10 % en poids, de préférence 0,1 à 5 % en poids, particulièrement préférentiellement 0,1 à 2 % en poids de tensioactifs, par rapport à la masse totale, sont contenus.

7. Procédé mono-étape continu pour la fabrication d'un élément de protection anti-incendie (35) comprenant les étapes suivantes :
- mise à disposition de deux récipients de réserve (2, 6), un premier récipient de réserve (2) étant garni avec les substances de départ de la composition de protection anti-incendie
- 25 à 70 % en poids de SiO₂ (teneur en matière solide)
- 0,05 à 10 % en poids de tensioactifs
- 0,1 à 25 % en poids de polyol
- 0,05 à 2 % en poids d'oxyde d'un métal alcalin
- 0,05 à 20 % en poids d'acide
- 0,01 à 10 % en poids d'une matière de protection anti-corrosive
- de l'eau distillée ou déminéralisée,
qui sont mélangées dans le premier récipient de réserve (2) et un deuxième récipient de réserve (6) étant garni avec une substance de départ basique ;
- mise à disposition de deux systèmes de transport (8, 10) pour transporter les substances de départ depuis le récipient de réserve (2, 6) respectif dans un dispositif mélangeur (12), la masse de substances de départ amenée au dispositif mélangeur (12) pouvant être prédéterminée ;
- mélange des substances de départ provenant des deux récipients de réserve (2, 6) pour donner un mélange de matières dans le dispositif mélangeur (12) ;
- dégazage continu du mélange de matières par rotation dans un dispositif (22) soumis au vide ;
- transport du mélange de matières dégazé au moyen d'un autre système de dosage (26) pour transformation ;
- transformation du mélange de matières dégazé en chargeant le mélange de matières dans une cavité (32) qui est aménagée entre deux éléments surfaciques de délimitation spatiale (28, 30) de type plaque et disposés en parallèle l'un de l'autre, les deux éléments surfaciques de délimitation spatiale (28, 30) étant étanches sur leur pourtour à l'exception d'une ouverture (34) dirigée vers le haut et destinée au remplissage de la cavité (32) aménagée ; et
- durcissement par vieillissement du mélange de matières à une température élevée dans la plage de 65 à 95°C,
dans lequel les tensioactifs sont anioniques, cationiques et/ou amphotères.

8. Procédé de fabrication d'un élément de protection anti-incendie selon la revendication 7, **caractérisé en ce que**
le dispositif mélangeur (12) est placé à une température plus élevée lors de l'amenée des substances de départ provenant des deux récipients de réserve (2, 6) que lors de la sortie du mélange de matières hors du dispositif mélangeur (12).

9. Procédé de fabrication d'un élément de protection anti-incendie selon les revendications 7 et 8, **caractérisé en ce que**
le dispositif mélangeur (12) est réglé à une température de 40 à 80°C, de préférence 50 à 70°C et particulièrement préférentiellement 60 à 65°C, lors de l'amenée des substances de départ provenant des deux récipients de mélange (2, 6).

10. Procédé de fabrication d'un élément de protection anti-incendie selon les revendications 7 à 9, **caractérisé en ce que**
la température du mélange de matières diminue dans le sens longitudinal (L) à l'intérieur du dispositif mélangeur (12).

11. Procédé de fabrication d'un élément de protection anti-incendie selon les revendications 7 à 10, **caractérisé en ce que**
des additifs inorganiques, qui sont choisis de préférence dans le groupe constitué par les pigments, les oxydes métalliques, les oxydes mixtes, les fibres de carbone, les fibres de céramique, les fibres de verre, la poudre de verre, les microsphères creuses de verre, le sable, l'argile, la bentonite ou un mélange de ceux-ci, sont amenés pendant le dégazage continu.

12. Procédé de fabrication d'un élément de protection anti-incendie selon les revendications 7 à 10, **caractérisé en ce que**
le durcissement par vieillissement de l'élément de protection anti-incendie (35) se fait au moyen de la température, de préférence au moyen de la convection, ou du rayonnement, de préférence rayonnement infrarouge ou rayonnement micro-ondes, pendant 20 à 30 h, de préférence pendant 22 à 26 h.
